# EUROPEAN PATENT SPECIFICATION

(11) **EP 2 549 300 B1**
(45) Date of publication and mention of the grant of the patent: **17.06.2020**
(21) Application number: 12160234.6
(22) Date of filing: 19.03.2012
(51) Int. Cl.: G01V 1/155

(54) **Seismic shaker**
Seismischer Schüttler
Oscillateur sismique

(30) Priority: 18.03.2011 NL 2006429
(43) Date of publication of application: 23.01.2013
(73) Proprietor: Magnetic Innovations BV, 5507 LB Veldhoven (NL)
(72) Inventor: Dams, Johannes Adrianus Antonius, 5509 KD Veldhoven (NL); Laro, Dick, 4814 VG Breda (NL); Van Dijk, Paul, 5754 HX Deurne (NL)
(74) Representative: Verhees, Godefridus Josephus Maria

(56) References cited:
- GB-A- 2 043 896
- JP-A- 6 003 458
- US-A- 4 821 246
- US-A- 4 959 818
- US-A- 5 969 297
- US-A1- 2009 073 807

## Description

### Field of the Invention

The invention relates to a seismic shaker comprising a base plate for placement on the floor, as well as a reaction mass on top of the base plate, which is connected to the base plate via coupling means, and at least three independently controllable electromagnetic actuators between the base plate and the reaction mass, which actuators are connected to the base plate and the reaction mass and with which a force and a moment can be exercised on the base plate, which seismic shaker further comprises at least one gravity compensator formed by a spring. For seismic monitoring and exploration of oil and gas reserves shakers are used to vibrate the ground. The transmissibility of the soil is measured with a combination of sensors on the shaker and on the ground. The reproducibility of the excitation signals is important to be able to detect changes in the ground.

### State of the art

A seismic shaker of the kind described above is known from JP 6 003458 A. A standard shaker has one acceleration sensor on the reaction mass.

US 4 959 818 A1 discloses an apparatus for generating elliptically polarized shear waves into the earth.

US 2009/073807 A discloses a seismic shaker for producing P-waves into the earth.

### Summary of the Invention

It is the object of the invention to improve the known shaker. The shaker according to the invention is disclosed in claim 1.

In the shaker according to the invention more than one acceleration sensor is used for the purpose of detecting tilt of the shaker and/or to make vibration modes, which have a negative influence, invisible with specific control techniques. The sensors can make tilts individually visible, which benefits the accuracy with which the power and frequency of the signal is produced.

The at least one gravity compensator allows the reaction mass also to serve as a hold-down mass. In addition, because of this excitation can be low frequency and reproducible. The gravity compensator strongly reduces the load on the engines because gravity need not to be overcome by the actuators. The thermal load of the actuators in case no gravity compensator is present would be far too high, so that the force which is used for the shaking should be reduced drastically.

To be able to excite even better at low-frequency and reproducible, a further embodiment of the seismic shaker according to the invention is characterized in that the actuators are formed by electromagnetic linear motors, without ferromagnetic material at the coils. Adverse parasitatire forces which are often present in such actuator concepts are thus avoided. The iron-less linear motors are standard in the semiconductor industry. They have a lower efficiency than iron engines, but are more reproducible. In the seismic shaker application usually a high force is required so that the choice of iron-less motors is not trivial. This shaker is characterized by a high reproducibility, and the loss of force is compensated by the use of several motors.

Still better low-frequency and reproducible excitation is possible with a further embodiment of the seismic shaker according to the invention in which a parallel guiding free of hysteresis and slack in the direction of displacement is present between the base plate and the reaction mass. Also, a position sensor may be added that measures the relative distance between the reaction mass and base plate, and wherein metering control engineering by means of the actuators through feedback the residual stiffness is compensated. The performance with regard to the precise making of low-frequency signals with large amplitude can thereby be improved even further.

In order to prevent tipping over of the shaker and mis-drops, one can with the actuators by means of control engineering act a torque around the center of mass of the shaker, because the forces of the three actuators (positioned at 120 degrees around the center of mass) are individually controllable. The total force applied to the soil can be kept the same, because the sum of the three actuator forces also can be kept the same (only the point of application of the resultant force relative to the center of mass is shifted).

The design of the shaker according to the invention can be regarded as modular within certain limits, because by means of application of multiple actuators (3 pieces, or 6 pieces, or 9 pieces, etc.), the peak power of the shaker can be increased, whereby the mechanical structure remains the same. With the shaker one is eg. able to build a version with 3, 6 or 9 actuators and with this with one design an effective solution can be offered for three force levels without any need to modify the mechanical construction.

In order to obtain a higher accuracy, it is possible to calibrate the force constant of the various motors by a position sensor and to correct these by means of a feed-forward (implemented as a look-up table or mathematical function) in the form of a stator versus mover position-dependent stream. Then at low frequencies where the results are large one is able to produce more accurately an exact sinusoidal force with a constant amplitude.

### Brief description of the drawings

The invention will be further elucidated with reference to an exemplary embodiment shown in the drawings of the shaker according to the invention. In the drawings:
Figure 1 shows schematically a one-dimensional dynamic model of the shaker, and
Figure 2 shows the design of the shaker.

### Detailed description of the drawings

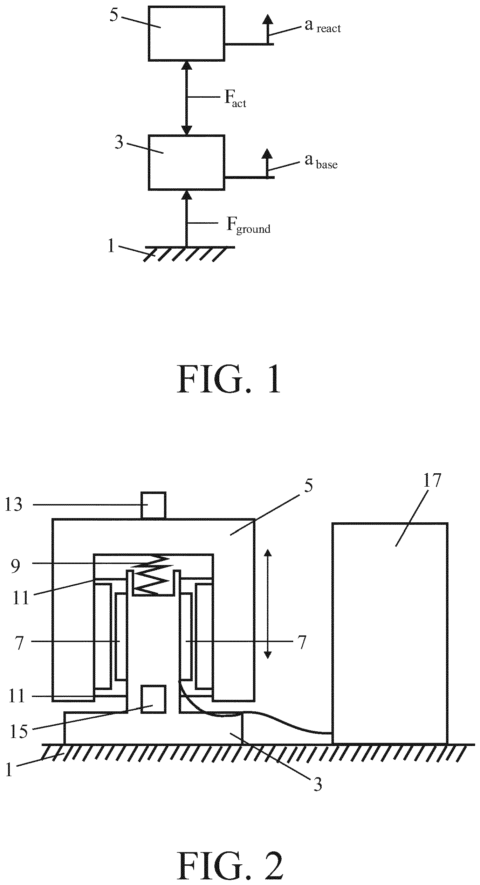

Figure 1 schematically shows a one-dimensional dynamic model of the shaker, wherein a base plate 3 is present on the floor 1, and a reaction mass 5 is present above the base plate and is coupled with the base plate. A linear motor generates the force F_{act}, which acts on the base plate 3 and on the reaction mass 5. The force F_{ground} acting on the ground is: m_{react}.a_{react} + m_{base}.a_{base} where a is the acceleration and m the mass. This is called the "weighted-sum ground force".

Figure 2 the design of the shaker is shown. The base plate 3 is coupled via a gravity compensator 9 to the reaction mass 5. This gravity compensator is formed by a low-frequency spring. The reaction mass is connected via a slack parallel guiding, which is formed by six folded-over leaf springs 11, in the vertical direction movable relative to the base plate 3. Between the base plate 3, and the reaction mass 5, three electromagnetic actuators are present which are formed by linear motors 7 which are present on the reaction mass every 120 degrees. These three linear motors 7 can generate a sinusoidal force of 6700N. Both on the reaction mass and on the base plate an acceleration sensor 13 respectively 15 is present that is used to calculate the weighted-sum ground force. The linear motors 7 are connected with power electronics and processor unit 17.

Characteristic properties of the shaker are:
Reaction Mass: between 500 and 2000 kg
Mass base: between 150 and 300 kg
Active force: in the order of magnitude of 5000 to 10000 N
Frequency: 2-200 Hz
Active stroke: between 25 and 76 mm

In a simplified model, the soil can be modeled by a spring, which results in a resonant frequency of the base plate on the ground. In order to reproducibly inject a force into the ground at and above this frequency, a feedback loop is closed over the measured weighted-sum signal and the actuator. The performance of the feedback loop is limited by the flexible modes in the shaker. Therefore, the design is optimized for sensor and actuator placement (mode shape observability), base plate, reaction mass and leaf spring design (damping).

## Claims

1. Seismic shaker comprising a base plate (3) for placement on the floor (1), as well as a reaction mass (5) on top of the base plate (3), which is connected to the base plate via coupling means, and at least three independently controllable electromagnetic actuators (7) between the base plate and the reaction mass, which actuators (7) are connected to the base plate (3) and the reaction mass (5) and with which a force and a moment can be exercised on the base plate (3), which seismic shaker further comprises at least one gravity compensator (9) formed by a spring, **characterized in that** the shaker comprises a number of acceleration sensors (13) being present on the reaction mass (5) such that tilt of the shaker can be detected, and with which acceleration of the reaction mass (5) can be determined, and **in that** the reaction mass (5) is movable relative to the base plate (3) in a vertical direction and the coupling means comprise a parallel guiding (11) and the spring is a low-frequency spring.

2. Seismic shaker according to claim 1, **characterized in that** the actuators (7) are formed by electromagnetic linear motors.

3. Seismic shaker as claimed in claim 2, **characterized in that** in the coils of the actuators (7) no ferromagnetic material is present.

4. Seismic shaker according to any one of the preceding claims, **characterized in that** the shaker comprises a control loop which can compensate the residual stiffness based on the measured distance between the base plate (3) and the reaction mass (5).

## Patentansprüche

1. Seismischer Shaker, der eine Grundplatte (3) für die Aufstellung auf dem Boden (1) sowie eine über der Grundplatte (3) angeordnete Reaktionsmasse (5) umfasst, die über Verbindungsmittel mit der Grundplatte verbunden ist, und der mindestens drei zwischen der Grundplatte und der Reaktionsmasse angeordnete, unabhängig voneinander bewegliche elektromagnetische Aktuatoren (7) umfasst, die mit der Grundplatte (3) und der Reaktionsmasse (5) verbunden sind und mit denen eine Kraft und ein Moment auf die Grundplatte (3) ausgeübt werden kann, wobei der besagte seismische Shaker ferner mindestens einen Schwerkraftkompensator (9) umfasst, der durch eine Feder gebildet wird, **dadurch gekennzeichnet, dass** der Shaker mehrere Beschleunigungssensoren (13) umfasst, die auf der Reaktionsmasse (5) so angeordnet sind, dass die Kippbewegung des Shakers registriert und anhand dessen die Beschleunigung der Reaktionsmasse (5) bestimmt werden kann, und ferner **dadurch gekennzeichnet, dass** die Reaktionsmasse (5) in vertikaler Richtung zur Grundplatte (3) beweglich ausgeführt ist, dass die Verbindungsmittel eine Parallelführung (11) umfassen und dass die Feder als Niederfrequenzfeder ausgeführt ist.

2. Seismischer Shaker nach Anspruch 1, **dadurch gekennzeichnet, dass** die Aktuatoren (7) durch elektromagnetische Linearmotoren gebildet werden.

3. Seismischer Shaker nach Anspruch 2, **dadurch gekennzeichnet, dass** in den Spulen der Aktuatoren (7) kein ferromagnetisches Material enthalten ist.

4. Seismischer Shaker nach einem der vorangegangenen Ansprüche, **dadurch gekennzeichnet, dass** der Shaker eine Regelschleife umfasst, mit der anhand des gemessenen Abstands zwischen der Grundplatte (4) und der Reaktionsmasse (5) die Reststeifigkeit kompensiert werden kann.

## Revendications

1. Secoueur sismique comprenant une plaque de base (3) pour poser sur le sol (1), ainsi qu'une masse de réaction (5) se trouvant au-dessus de la plaque de base (3) et étant reliée à la plaque de base via des coupleurs, et au moins trois actionneurs électromagnétiques autonomes pilotables (7) se trouvant entre la plaque de base et la masse de réaction et étant reliés à la plaque de base (3) et à la masse de réaction (5) et grâce auxquels on peut exercer une force et un moment sur la plaque de base (3), lequel secoueur sismique comprend en outre au moins un compensateur de gravité (9) qui est formé d'un ressort, **caractérisé en ce que** le secoueur comprend un certain nombre de capteurs d'accélération (13) se trouvant sur la masse de réaction (5) de telle sorte que l'inclinaison du secoueur peut être détectée et grâce à quoi une accélération de la masse de réaction (5) peut être définie, et **en ce que** la masse de réaction (5) est relativement mobile en direction verticale par rapport à la plaque de base (3) et les coupleurs comprennent une conduite parallèle (11) et le ressort est un ressort à basse fréquence.

2. Secoueur sismique selon la revendication 1, **caractérisé en ce que** les actionneurs (7) sont formés de moteurs électromagnétiques linéaires.

3. Secoueur sismique selon la revendication 2, **caractérisé en ce qu'**aucun matériau ferromagnétique ne se trouve dans les bobines des actionneurs (7).

4. Secoueur sismique selon une des revendications précédentes, **caractérisé en ce que** le secoueur sismique comprend une boucle de commande qui peut, en fonction de la distance mesurée entre la plaque de base (4) et la masse de réaction (5), compenser la rigidité résiduelle.
